# EUROPEAN PATENT APPLICATION

(11) **EP 0 658 796 A1**
(43) Date of publication of application: **21.06.1995**
(21) Application number: 94309165.2
(22) Date of filing: 08.12.1994
(51) Int. Cl.: G03B 5/00, G02B 7/28

(54) **Camera**

(30) Priority: 10.12.1993 JP 341585/93; 24.12.1993 JP 345976/93
(71) Applicant: NIKON CORPORATION, Tokyo (JP)
(72) Inventor: Watanabe, Tsuneo, Suginami-ku, Tokyo (JP); Katayama, Akira, Koganei-shi, Tokyo (JP); Yamazaki, Satoshi, Ohta-ku, Tokyo (JP); Kai, Tadao, Kawasaki-shi, Kanagawa-ken (JP)
(74) Representative: Burke, Steven David

(57) **Abstract**

A camera provided with vibration detection means (80,44,81) for detecting the vibration of the camera, and an ultrasonic motor as the drive source for a driven part provided in the camera, comprises vibration attenuating means (43) for attenuating the vibration generated by the ultrasonic motor, in the path of propagation of the ultrasonic vibration from the ultrasonic motor to the vibration detection means (80,44,81).

## Description

### BACKGROUND OF THE INVENTION

### Field of the Invention

The present invention relates to a camera provided with vibration detecting means for detecting the shaking of hands or the like.

### Related Background Art

An interchangeable lens barrel, detachably mountable for example on a single-lens reflex camera, is equipped with a zooming mechanism for continuously varying the focal length of a phototaking optical system from a telephoto end to a wide-angle end, an auto focusing (AF) mechanism for automatic focusing to the object etc..

In particular the recent lens barrel is also equipped with an antivibration mechanism for compensating the shaking of the hands of the photographer, and is being developed toward multiple functions.

Such lens barrel equipped with the antivibration mechanism is becoming further equipped, together with the above-mentioned progress toward the multiple functions, with a photo-optical system of various kinds, a driving mechanism and a control circuit therefor, and sensors for detection of various information, and, for this reason, the effective utilization of the space in the lens barrel is strongly desired for.

The dimension of such lens barrel is determined, to a certain extent, by the diameter of the phototaking optical system to be incorporated therein, and an unnecessary increase in the dimension is undesirable. For this reason it is required to install various driving mechanisms including electric motors therefor, electric control circuits and sensors in efficient manner, utilizing the dead space in the lens barrel as far as possible.

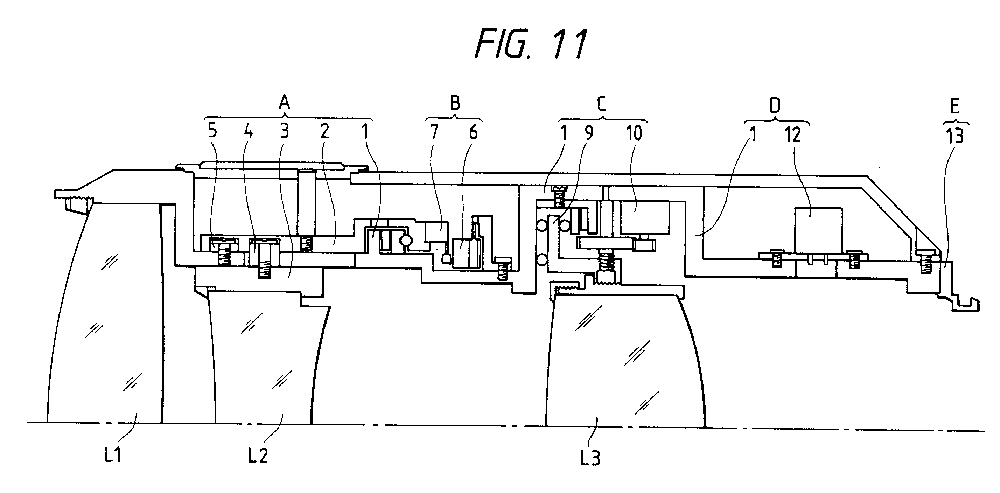

Fig. 11 is a cross-sectional view of a conventional camera provided with vibration detecting means.

The lens of said camera is composed for example of optical systems L1, L2, L3; a focusing unit, an ultrasonic motor (USM) unit; an antivibration unit and a sensor unit.

The focusing unit includes a fixed tube 1, a cam ring 2 provided on the external periphery of said fixed tube 1, a lens barrel 3 provided on the internal periphery of said fixed tube 1 and adapted to support the optical system L2, and a pin 4 fixed on the lens barrel 3 and adapted to engage with the cam ring 2, whereby the rotation of the cam ring 2 moves the optical system L2 in the axial direction through the pin 4 and the lens barrel 3 thereby effecting the focusing operation.

The USM unit includes a stator 6 for generating a travelling vibration on the surface of an elastic member by the oscillation with a piezoelectric member, and a rotor 7 to be rotated by pressure contact with said stator 6. Said rotor 7 is linked with the cam ring 2, which is rotated by the rotation of the rotor 7.

The antivibration unit includes a fixed tube 1, a lens support member 9 supporting an antivibration optical system L3 and rendered movable with respect to said fixed tube 1 in a direction perpendicular to the optical axis, and a motor 10 for driving the lens support member 9 through a power transmitting system such as a lead screw, wherein the rotation of the motor 10 drives the antivibration optical system L3 in a direction perpendicular to the optical axis through the lens support member 9, thereby compensating the shaking of the hands.

The sensor unit includes a fixed tube 1 and a vibration sensor 12 integrally mounted on the fixed tube 1, and is adapted to detect the vibration applied to the camera.

However such conventional camera has been associated with a drawback that the vibration sensor 12 of the sensor unit picks up, in addition to the vibration caused by the shaking of the hands, the mechanical vibration of the focusing unit, ultrasonic vibration of the USM unit, vibration of the motor of the antivibration unit, and vibration of the mirror movement, film advancement, shutter operation etc. in the camera body, whereby the accuracy of detection of the vibration caused by the hand shaking becomes deteriorated.

Also in the conventional configuration, various mechanism are mounted on a single fixed member constituting the lens barrel, whereby the efficiency of assembling and adjustment is deteriorated and the manufacturing cost is inevitably elevated.

### SUMMARY OF THE INVENTION

In consideration of the foregoing, an object of the present invention is to provide a camera provided with vibration detection means capable of eliminating vibration noises other than the vibration induced by the hand shaking, thereby improving the accuracy of detection of the vibration detection means.

Another object of the present invention is to provide a camera provided with a lens barrel, enabling to improve the efficiency of assembling and adjustment in various parts of the lens barrel, and to reduce the manufacturing cost.

The above-mentioned objects can be attained, according to a first aspect of the present invention, by a camera provided with vibration detection means for detecting the vibration of the camera and an ultrasonic motor for driving a driven part provided in the camera, said camera comprising vibration attenuating means for attenuating the vibration generated by said ultrasonic motor, in the path of propagation of the ultrasonic vibration from said ultrasonic motor to the vibration detection means.

According to a second aspect of the present invention, there is provided a camera provided with vibration detection means for detecting the vibration of the camera, and camera driving means for driving a driven part provided in said camera, said camera comprising vibration attenuating means for attenuating the vibration generated by said camera driving means, in the path of propagation of the mechanical vibration from said camera driving means to the vibration detection means.

Preferably said camera driving means is focusing lens driving means, antivibration lens driving means, mirror driving means, film feeding means or shutter driving means or a combination thereof, and has a driving source consisting of a DC motor and/or an ultrasonic motor.

The vibration attenuating means is preferably composed of a damping member positioned between first and second fixed tubes constituting the lens barrel of the camera and provided at the connecting portion of said lens tubes.

Otherwise the vibration attenuating means is preferably composed of a damping member positioned between first and second units constituting a camera mechanism of the camera, and provided at the connecting portion of said units.

Furthermore, the vibration attenuating means is preferably composed of a damping member positioned between the vibration detection means and a fixed member on which said vibration detection means is fixed.

Otherwise the vibration attenuating means is preferably composed of a damping member provided integrally on the surface of a member constituting the path of propagation of the ultrasonic vibration.

Otherwise the vibration attenuating means is preferably composed of a fixed member formed by die cast molding.

According to a third aspect of the present invention, there is provided a camera equipped with a lens barrel composed of a focusing unit for focusing of a main optical system, an image antivibration mechanism consisting of an antivibration optical system for preventing image vibration by a movement in a plane perpendicular to the optical axis of the main optical system and an image antivibration driving mechanism for driving said antivibration optical system, and a vibration sensor for detecting the vibration, wherein a fixed member constituting the lens barrel of said camera is composed of plural separate units which are integrally connected to constitute said lens barrel, and said focusing unit, image antivibration mechanism and vibration sensor are provided respectively on different units.

An ultrasonic motor is preferably employed as the drive source for the focusing unit. Also, the ultrasonic motor is preferably employed as the drive source for the image vibration preventing mechanism.

Furthermore, it is preferable that the focusing unit, the image vibration preventing mechanism and the vibration sensor are electrically connected to a flexible printed circuit board, respectively. It is also preferable that each of the focusing unit, the image vibration preventing mechanism and the vibration sensor can be checked for operation thereof independently.

According to the present invention, since vibration attenuating means is provided in the path of propagation of the ultrasonic or mechanical vibration between the vibration source and the vibration detection means, it is rendered possible to intercept the ultrasonic vibration of the ultrasonic motor or the mechanical vibration from another more. Consequently the noises in vibration other than that caused by hand shaking can be reduced and the vibration detection means can improve the accuracy of detection.

Also according to the present invention, since the focusing unit, driving mechanism for the image antivibration mechanism and vibration sensor are provided on the respectively different units, there can be reduced the direct influence, on the vibration sensor, of the vibrations generated in such driving units or induced by the movements of actuators therein.

Furthermore, according to the present invention, the mounting of the focusing unit, image antivibration mechanism and vibration sensor on respectively different units constituting the lens barrel facilitates the assembling and adjusting operation of each mechanism.

Furthermore, according to the present invention, the installation of the ultrasonic motor, employed as the drive source for the focusing unit, in a same unit as that for said focusing unit enables simplification of the structure and more efficient space utilization.

The above and other objects, features and advantages of the present invention will be explained hereinafter and may be better understood by reference to the drawings and the descriptive matter which follows.

### BRIEF DESCRIPTION OF THE DRAWINGS

Fig. 1 is a schematic longitudinal cross-sectional view showing the upper half of a lens barrel constituting a 1st embodiment of the present invention;
Fig. 2 is a schematic longitudinal cross-sectional view showing the upper half of a lens barrel constituting a 2nd embodiment of the present invention;
Fig. 3 is a schematic longitudinal cross-sectional view showing the upper half of a lens barrel constituting a 3rd embodiment of the present invention;
Fig. 4 is a schematic longitudinal cross-sectional view showing a camera constituting a 4th embodiment of the present invention;
Fig. 5 is a schematic longitudinal cross-sectional view showing the upper half of a lens barrel constituting a 5th embodiment of the present invention;
Fig. 6 is a schematic longitudinal cross-sectional view showing the upper half of a lens barrel constituting a 6th embodiment of the present invention;
Fig. 7 is a schematic longitudinal cross-sectional view showing the upper half of a lens barrel constituting a 7th embodiment of the present invention;
Fig. 8 is a schematic longitudinal cross-sectional view showing a part of a lens barrel constituting an 8th embodiment of the present invention;
Fig. 9 is a schematic longitudinal cross-sectional view showing an entire lens barrel constituting a 9th embodiment of the present invention;
Fig. 10 is a schematic longitudinal cross-sectional view showing an entire lens barrel constituting a 10th embodiment of the present invention; and
Fig. 11 is a schematic longitudinal cross-sectional view showing the upper half of a conventional lens barrel.

### DETAILED DESCRIPTION OF THE PREFERRED EMBODIMENTS

### [1st embodiment]

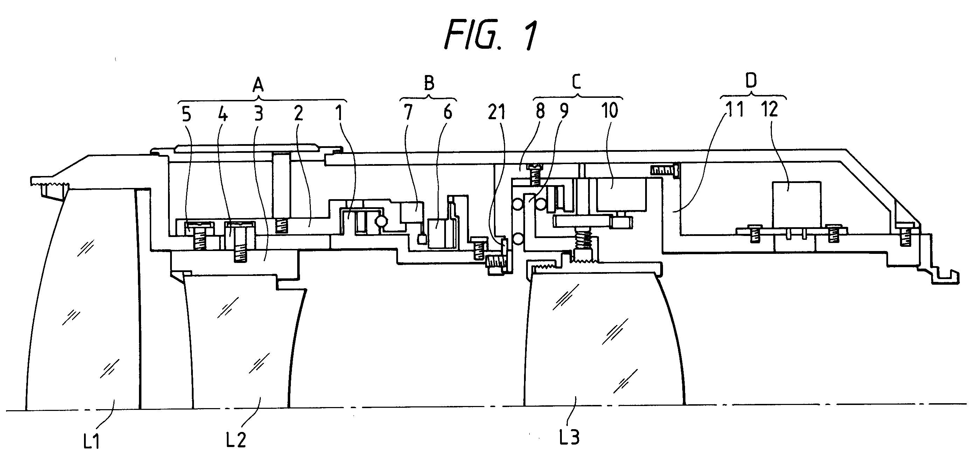

Fig. 1 is a schematic cross-sectional view of a lens barrel constituting a 1st embodiment of the camera of the present invention. In the 1st to 8th embodiments to be explained in the following, components equivalent in function to those in the above-explained conventional structure shown in Fig. 11 are represented by same numbers or symbols and the explanation will be omitted for such components.

In the 1st embodiment, a damping member 21 is provided in a connecting portion between the USM unit B and the antivibration unit C provided integrally with the sensor unit B.

Consequently the ultrasonic vibration generated in the USM unit B is intercepted by said damping member 21 and is not transmitted to the vibration sensor 12. There is also intercepted the mechanical vibration generated by axial movement of the optical system L2.

### [2nd embodiment]

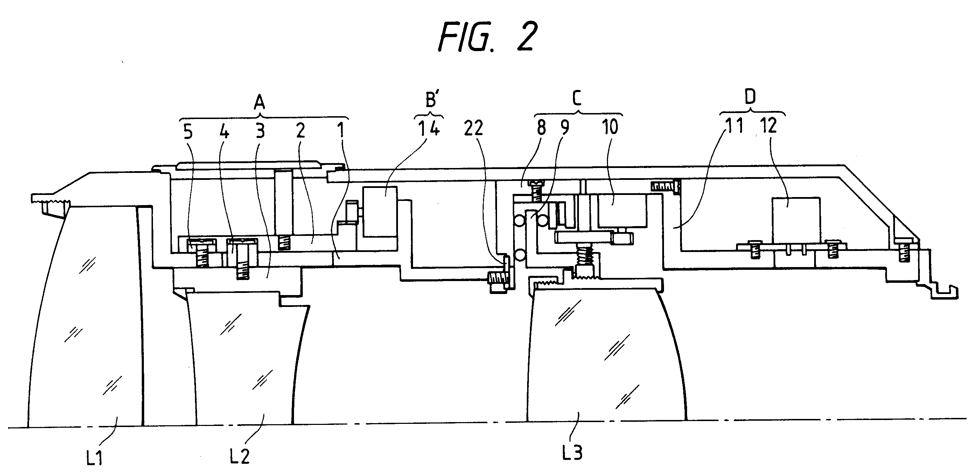

Fig. 2 is a cross-sectional view of a lens barrel constituting a 2nd embodiment of the camera of the present invention.

The 2nd embodiment employs a DC motor 14 for auto focusing, and, also in this case, a damping member 22 is provided in the connecting portion between the motor unit B' and the antivibration unit C integral with the sensor unit D.

In case of a camera with auto focusing or power zooming, vibration is always generated by the lens driving, regardless of the kind of motor employed. Thus the presence of the damping member 22 between the noise source and the vibration sensor 12 allows to intercept the vibration noises.

### [3rd embodiment]

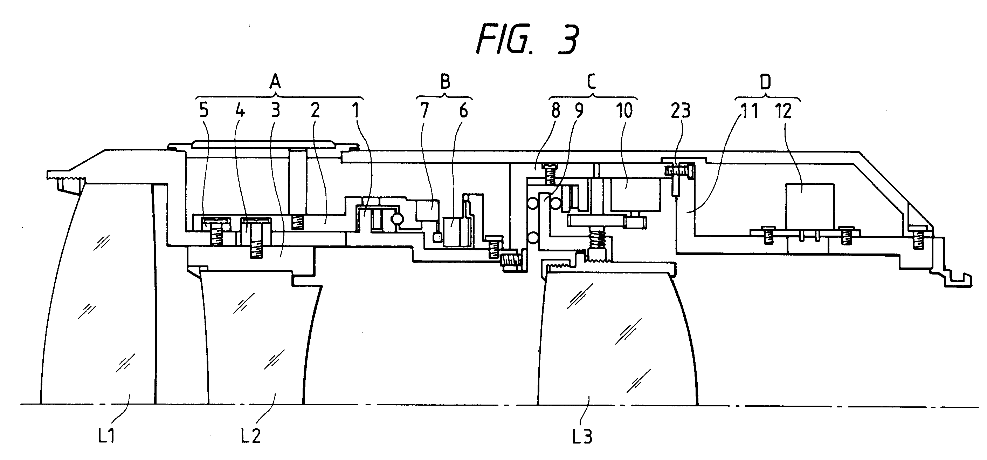

Fig. 3 is a cross-sectional view of a lens barrel constituting a 3rd embodiment of the camera of the present invention.

In this 3rd embodiment, a damping member 23 is provided in a connecting portion between the antivibration unit C and the sensor unit D.

The motor 10 of the antivibration unit C is composed of a DC motor, but it may also be composed of an ultrasonic motor.

### [4th embodiment]

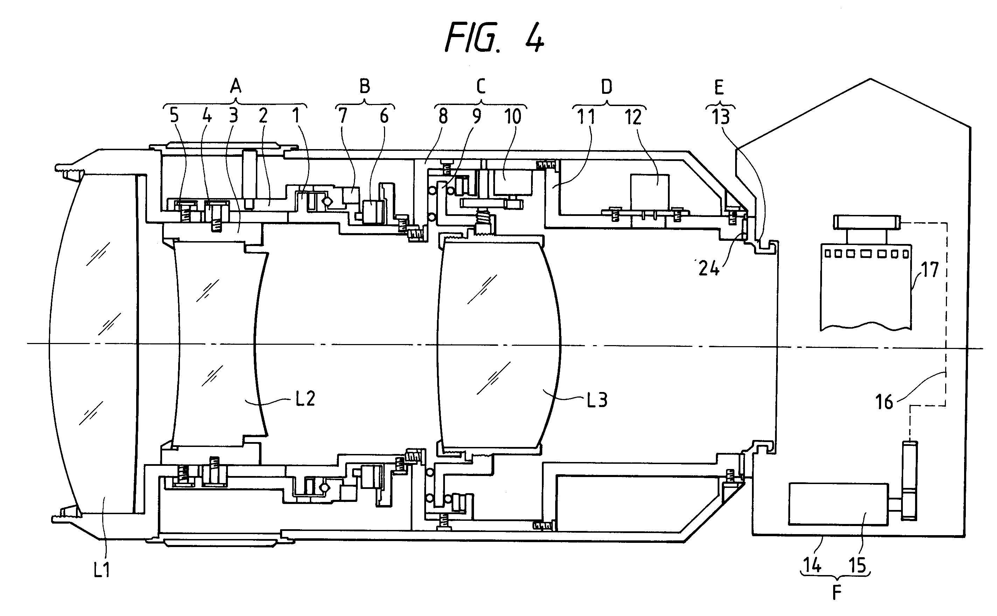

Fig. 4 is a cross-sectional view of a 4th embodiment of the camera of the present invention.

In this 4th embodiment, the camera body 14 is provided therein with a camera unit F with a micro USM 15, for feeding the film 17 through a power transmission system 16, wherein a damping member 24 is provided in a connecting portion between a coupling unit E including a mount 13 for connection with the camera body 14 and the sensor unit D. Said damping member 24 allows to intercept the ultrasonic or mechanical vibration from the camera body 14.

The camera body 14 is also provided, in addition to the film feeding device mentioned above, with a shutter driving device, a mirror driving device etc. driven respectively by DC motors or ultrasonic motors, and the mechanical or ultrasonic vibration from such motors can also be intercepted.

### [5th embodiment]

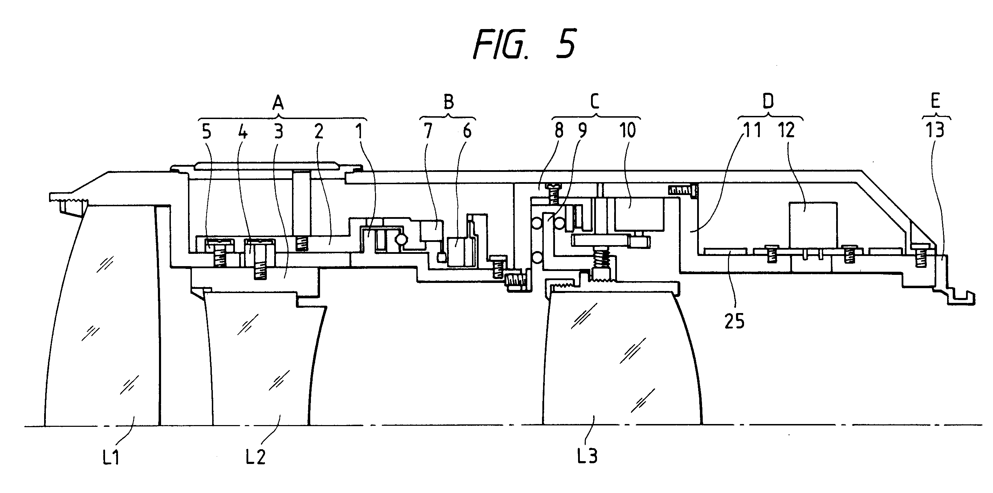

Fig. 5 is a cross-sectional view of a lens barrel constituting a 5th embodiment of the camera of the present invention.

In the 5th embodiment, a damping member 25 is adhered on the surface of the fixed tube 11, in a portion between the USM unit B or the antivibration unit C and the sensor unit D. Such damping member 25 can intercept the surface wave, propagating along the surface of the fixed tube 11 from the USM unit B.

### [6th embodiment]

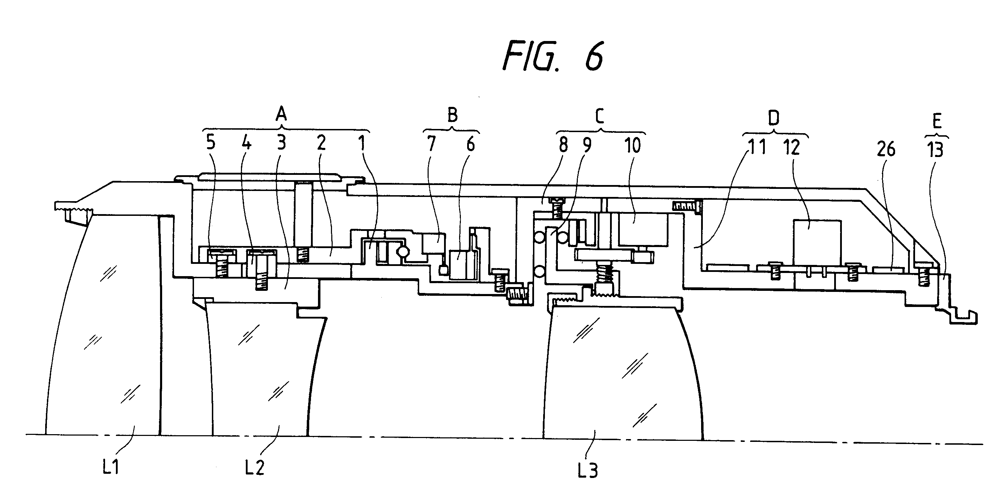

Fig. 6 is a cross-sectional view of a lens barrel constituting a 6th embodiment of the camera of the present invention.

In the 6th embodiment, a damping member 26 is adhered on the surface of the fixed tube 11, in a portion between the counting unit E including the mount 13 for coupling with the camera body (not shown) and the sensor unit D.

### [7th embodiment]

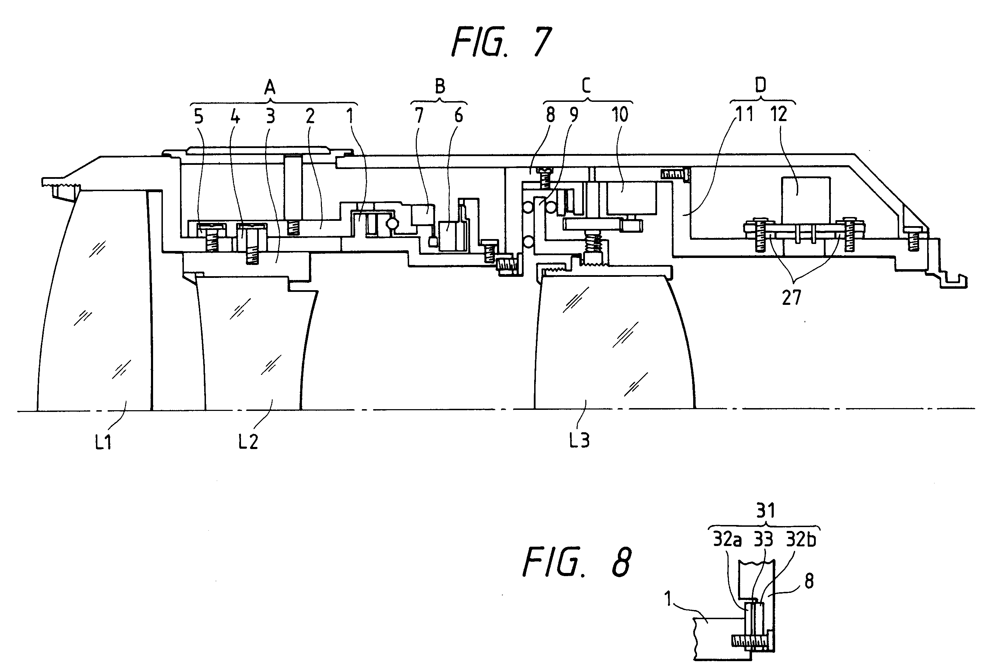

Fig. 7 is a cross-sectional view of a lens barrel constituting a 7th embodiment of the camera of the present invention.

In the 7th embodiment, a damping member 27 is provided between the fixed tube 11 and the vibration sensor 12, at the mounting of the vibration sensor 12 on the fixed tube 11 of the sensor unit D.

### [8th embodiment]

Fig. 8 is a cross-sectional view of a part of a lens barrel constituting an 8th embodiment of the camera of the present invention.

In the 8th embodiment, a damping member 31 is provided in a connecting portion between fixed tubes 1 and 8. Said damping member 31 has a vibration suppressing structure, consisting of a damping material 33 composed of resin or rubber sandwiched between two metal materials 32a and 32b.

In this structure, the fixed tube 1 is connected only with the metal material 32a while the other fixed tube 8 is connected only with the other metal material 32b, whereby the fixed tubes 1, 8 are completely separated by the damping material 33 so that the intercepting effect for the vibration can be enhanced.

### [9th embodiment]

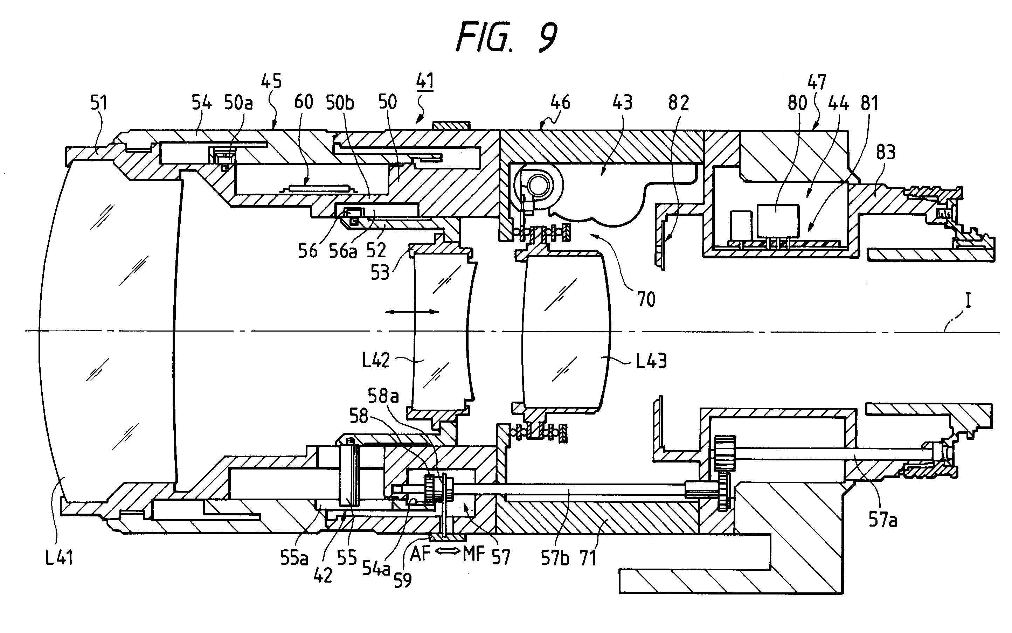

Fig. 9 is a cross-sectional view of a lens barrel constituting a 9th embodiment of the camera of the present invention.

In the 9th embodiment, an interchangeable lens barrel 41 detachably mountable on a single-lens reflex camera is provided, as shown in Fig. 9, with a focusing mechanism 42 for focusing a main optical system by manual focusing (MF) or auto focusing (AF), an image vibration preventing mechanism 43 for preventing the image vibration resulting from the shaking of the hands of the photographer, and a vibration sensor unit 44 for detecting the status of image vibration.

More specifically, said lens barrel 41 is composed of a front assembly 45 incorporating the AF/MF focusing mechanism 42 and constituting a focusing unit, an intermediate assembly 46 incorporating the image vibration preventing mechanism 43 and constituting an antivibration unit, and a rear assembly 47 incorporating the vibration sensor unit 44 and constituting a vibration sensor unit which is adapted to be detachably connected, at the rear end thereof, to the unrepresented camera body.

Said lens barrel 41 is provided, as the phototaking optical system, with a first lens group L41, a second lens group L42 and a third lens group L43.

The first lens group L41 is fixed at the front end of the lens barrel 41, while the second lens group L42 constitutes a focusing lens group supported axially movably in the lens barrel 41 for focusing, and the third lens group L43 constitutes an image vibration preventing lens group rendered movable in the X- and Y-directions along a plane perpendicular to the optical axis I for preventing the vibration of the object image, on the film plane, resulting for example from the hand shaking.

Said front assembly (hereinafter called focusing unit) 45 is provided with a fixed tube 50 as a fixed member of the lens barrel, and said first lens group L41 is supported by a lens supporting frame 51 at the front end side of said fixed tube 50.

On the internal periphery, toward the intermediate assembly (hereinafter called antivibration unit) 46, of said fixed tube 50, there are provided components constituting the focusing mechanism 42. In said fixed tube 50, the external periphery of a movable tube 52 is fitted and supported so as to be movable in the direction of the optical axis I, and said movable tube 52 is provided, at the rear end thereof, with a lens frame 53 for supporting the second lens group L42.

Also on the external periphery at the front end side of said fixed tube 50, there is rotatably fitted a rotatable tube 54 as a rotary tube member constituting a focusing ring for moving said second lens group L42 in the axial direction. The rotation of said rotatable tube 54 causes the axial movement of the movable tube 52, thereby causing the focusing movement of the second lens group L42 in the lens frame 53.

Said rotatable tube 54 constitutes a manual focusing ring for manual focusing of the second lens group L42, said ring to be rotated manually in a manual focusing mode as will be explained later. It is naturally rotated also in an auto focusing mode, by the rotation of the auto focusing drive source.

On the external periphery of said movable tube 52, there are provided link pins 55, 56. The link pin 55 protrudes radially through an escape portion of the fixed tube 50 and engages with a spiral guide groove 55a provided on the rotatable tube 54, while the link pin 56 engages with a straight key groove 56a formed on the internal periphery of the fixed tube 50, whereby the focusing operation is achieved in the already known manner.

Said rotatable tube 54 is rendered rotatable while it is restricted in the movement in the axial direction by the engagement of an engaging pin 50a of the fixed tube 50 with an annular groove.

On the internal periphery, at the rear end, of said rotatable tube 54 there is formed a segment gear 54a, meshing with a transmission gear 58 which is provided on a power transmission shaft portion 57, in axially movable but rotationally coupled manner for example by a spline coupling, said shaft portion 57 receiving the rotary power from the camera body through transmission shafts 57a, 57b.

In the focusing mechanism 42 explained above, the rotation of the transmission gear 58 on the transmission shaft portion 57 in the meshing state as shown in Fig. 9 causes the rotation of the rotatable 54 through the segment gear 54a, thereby effecting the focusing operation of the second focusing lens group L42 through the movable tube 52 in the auto focusing mode.

On a part of the external periphery of the fixed tube 51 there is provided a MF/AF switching ring 59 which is rendered slidable in the axial direction for a switching operation and which is linked with a switching lever portion 58a extended from a part of the transmission gear 58, supported axially movably on the transmission shaft 57b of said shaft portion 57.

The rotatable tube 54 can be detached from the auto focusing drive source, by shifting said switching ring 59 to the MF side, thereby axially moving the transmission gear 58 on the transmission shaft 57b and detaching said gear from the segment gear 54a. In this state the second focusing lens group L42 can effect a manual focusing operation, by manual rotation of the rotatable tube 54.

Also in a recessed portion, formed by a reduced-diameter portion 50b in the fixed tube 50, where the rotatable tube 54 is fitted outside in the front assembly 45, there is provided an electric circuit unit 60 consisting of a flexible printed circuit (FPC) board bearing a CPU and various electric components, suitably over said recessed portion or a part thereof, though such circuit unit is not entirely illustrated.

In the present embodiment, a part of said FPC board constituting the above-mentioned electric circuit unit 60 is extended to the image vibration preventing unit 46, in the lens barrel 41 as will be explained later, and a connecting portion provided at such extended part is connected to the image vibration preventing mechanism 43 provided in said unit 46 and also to the vibration sensor unit 44 in the rear assembly (hereinafter called vibration sensor unit) 47.

Also in the lens barrel 41, the image vibration preventing unit 46 incorporates an antivibration lens (third lens group L43) and an image vibration preventing drive mechanism 70 (only partly illustrated) constituting the image vibration preventing mechanism 43, and the vibration sensor unit 47 connected at the rear end side of the lens barrel incorporates a sensor unit 81 composed for example of a board bearing a vibration sensor 80.

In the interior at the front end portion of said vibration sensor unit 47, there is provided a diaphragm mechanism 82.

In these units 46, 47 there are provided wiring means composed for example of FPC boards for connecting electrical components and controlled components, and said wiring means are electrically connected in a space (not shown) on the external periphery of the intermediate assembly unit 46, together with the main FPC board of the focusing unit 45.

Also in said units 46, 47 there are suitably supported the transmission shafts 57a, 57b constituting said power transmission shaft portion 57.

In the present embodiment, as explained in the foregoing, the fixed member portion constituting the lens barrel 41 is divided into plural portions, i.e. a fixed tube 50, a first fixed tube portion 71 and a second fixed tube portion 83 respectively constituting the plural units 45, 46, 47, and adapted to be integrally connected for example with screws to constitute said lens barrel 41.

The aforementioned focusing mechanism 42, the image vibration preventing mechanism 43 consisting of the antivibration optical system L43 and the driving mechanism 70 therefor, and the vibration sensor unit 44 including the vibration sensor 80 are separately mounted respectively in said units 45, 46 and 47.

Such structure can suppress the direct influence, on the vibration sensor 80, of the vibration of the various driving units and the vibration caused by the movement of the actuators therein, owing to the separate positioning of the focusing mechanism 42, the image vibration preventing mechanism 43 and the vibration sensor 80 in respectively different units 45, 46 and 47. It is thus rendered possible to improve the accuracy of detection of the vibration by said sensor 80, thereby enabling to fully exploit the antivibration effect of the vibration preventing mechanism 43.

Also because the focusing mechanism 42, the image vibration preventing mechanism 43 and the vibration sensor unit 44 are respectively provided on the fixed tube 50, the first fixed tube portion 71 and the second fixed tube portion 83 respectively of the separate units 45, 46, 47 constituting the lens barrel 41, it is rendered possible to assemble each unit individually, thereby improving the assembling efficiency and enabling adjustment of each unit in this state. Consequently this structure is superior also in the adjusting efficiency, also facilitates integral connection of the units, and reduces the fluctuations in the components and the manufacturing cost.

In particular, this structure in which the lens barrel 41 is divided into three units 45, 46, 47 in front, at center and at rear enables separate assembling and adjustment of the individual unit in extremely simple and secure manner, and the lens barrel 41 can be thereafter obtained merely by integrally combining these units.

It is also possible to effect communication with an adjusting or communicating tool by suitably pressing the connecting portion thereof to the connection means such as the FPC board in the units 45, 46 and 47, thereby enabling adjustment in the individual unit in the assembled state thereof.

The above-explained structure is particularly effective in enabling the positioning of the vibration sensor 80, particularly susceptible to the positional precision, in adequate and secure manner, thereby improving the antivibration effect.

### [10th embodiment]

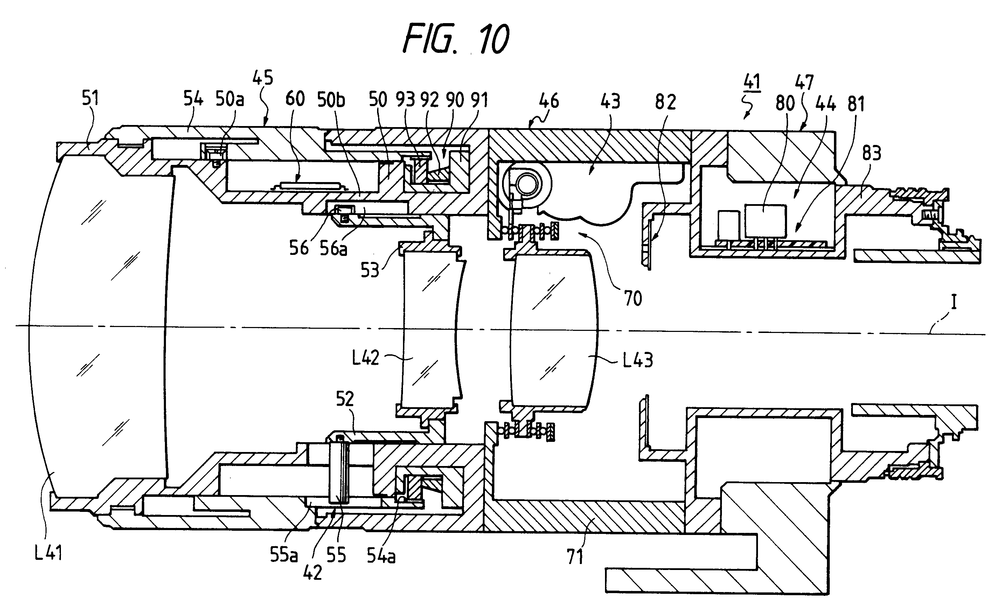

Fig. 10 is a cross-sectional view of a lens barrel constituting a 10th embodiment of the camera of the present invention.

The 10th embodiment employs, as the drive source for the focusing mechanism 42 for effecting the focusing operation of the main optical system, an ultrasonic motor 90 provided in the lens barrel 41 instead of the drive system provided in the camera body in the 9th embodiment.

Said ultrasonic motor 90 is composed, as shown in Fig. 10, of an annular stator 91, a stator piece 92 positioned in an external annular space, and a rotor 93 contacting, on a lateral face thereof, with said stator piece 92 and having a gear portion meshing with the segment gear 54a of said rotatable tube 54.

In said ultrasonic motor 90, in the auto focusing mode, the stator 91 is supported unmovably with respect to the fixed tube 50, while the rotor 93 is maintained rotatable with respect to the stator 91 and the stator piece 92.

On the other hand, in the manual focusing mode, the rotor 93 is rendered unmovable with respect to the stator 91 and the stator piece 92 while the stator 91 is rendered rotatable with respect to the fixed tube 50.

Such relationship are achieved, as already known, by the friction coefficients among the components and the couplings of the components in the energized and non-energized states.

Such ultrasonic motor 90, being compact, quiet in operation and annular in shape, is advantageous for being efficient in the incorporation into the lens barrel and dispensing with the clutch for switching the auto focusing and the manual focusing, owing to the above-mentioned relationships on rotation and coupling.

Such ultrasonic motor 90, if positioned together with the focusing mechanism 42 in the unit 45, provides additional advantages of simplification of the entire lens barrel structure, a higher efficiency of the space utilization in the lens barrel, an improvement in the assembling efficiency of the entire lens barrel and the adjusting efficiency in each unit, and a lowered manufacturing cost, in addition to the advantages in the foregoing embodiments.

The present invention is not limited to the foregoing embodiments but is subject to various variations and modifications, which are also included in the present invention.

For example, the AF unit A, the USM unit B, the antivibration unit C and the sensor unit D are arranged in this order in the foregoing 1st to 8th embodiments, but these units may be arranged in an arbitrary order. Also the sensor unit D may be provided in the camera body, instead of being provided in the lens barrel as in the foregoing embodiments.

The damping member may be composed of resin, rubber, a vibration-suppressing steel plate, or a low-density metal formed by die casting so as to suppress vibration. It is also effective to form the fixed tube 1, 8 and/or 11 itself by die casting in order to suppress the propagation of vibration therein.

Also in the foregoing 9th and 10th embodiments, the present invention has been applied to a lens barrel 41 to be attached to a single-lens reflex camera, but the present invention is not limited to such cases and is likewise effective in application to any lens barrel equipped with an antivibration mechanism, to be used in various cameras.

## Claims

1. A camera provided with vibration detection means for detecting the vibration in said camera, and an ultrasonic motor as the drive source for a driven part provided in said camera, comprising:
vibration attenuating means for attenuating the vibration generated by said ultrasonic motor, in a path of propagation of the ultrasonic vibration from said ultrasonic motor to said vibration detection means.

2. A camera provided with vibration detection means for detecting the vibration in said camera, and camera driving means for driving a driven part provided in said camera, comprising:
vibration attenuating means for attenuating the vibration generated by said camera driving means, in a path of propagation of the mechanical vibration from said camera driving means to said vibration detection means.

3. A camera according to claim 2, wherein said camera driving means is either one of focusing lens driving means, antivibration lens driving means, mirror driving means, film feeding means and shutter driving means, or a combination of at least two thereof, and the drive source therefor is composed of a DC motor and/or an ultrasonic motor.

4. A camera according to claim 3, wherein said vibration attenuating means is composed of a damping member positioned between first and second fixed tubes constituting the lens barrel of said camera, in a connecting portion of said fixed tubes.

5. A camera according to claim 4, wherein said vibration attenuating means is composed of a damping member positioned between first and second units constituting a camera mechanism of said camera, in a connecting portion of said units.

6. A camera according to claim 5, wherein said vibration attenuating means is composed of a damping member provided between said vibration detection means and a fixed part on which said vibration detection means is fixed.

7. A camera according to claim 6, wherein said vibration attenuating means is composed of a damping member provided integrally on the surface of a member constituting the propagating path of said ultrasonic vibration.

8. A camera according to claim 7, wherein said vibration attenuating means is composed of a fixed member formed by die casting.

9. A camera provided with a lens barrel including a focusing unit for effecting the focusing operation of a main optical system, an image vibration preventing mechanism consisting of an antivibration optical system rendered movable in a plane perpendicular to the optical axis of said main optical system for preventing the image vibration and an image vibration preventing drive mechanism for driving said antivibration optical system, and a vibration sensor for detecting the vibration, wherein:
a fixed member constituting said lens barrel is composed of plural separate units which are so integrally connected as to constitute said lens barrel; and
said focusing unit, said image vibration preventing mechanism and said vibration sensor are provided in respectively different units.

10. A camera according to claim 9, employing an ultrasonic motor as the drive source for said focusing unit.

11. A camera according to claim 9, employing an ultrasonic motor as the drive source for said image vibration preventing mechanism.

12. A camera according to claim 9, wherein said focusing unit, said image vibration preventing mechanism and said vibration sensor are electrically connected to a flexible printed circuit board, respectively.

13. A camera according to claim 9, wherein each of said focusing unit, said image vibration preventing mechanism and said vibration sensor can be checked for operation thereof independently.

14. Apparatus for use in or with a camera, the apparatus comprising a vibration sensor, and being arranged to attenuate vibration transmitted from a source in the apparatus towards the sensor, or to attenuate vibration transmitted from a source in the camera towards the sensor, to thereby reduce the undesirable effect of such vibration on the sensor.

15. Apparatus for use in or with a camera, the apparatus comprising a plurality of main supporting parts, and wherein a vibration sensor of the apparatus is not mounted on the same main supporting part as a source of vibration in said apparatus, whereby direct propagation of the vibration from the source undesirably to the sensor can be reduced.

16. A lens barrel constructed as a plurality of attachable barrel segments, each segment containing an functional unit of the lens barrel, to permit independent construction and/or testing of each segment and the functional unit contained in that segment.
